Europäisches Patentamt

European Patent Office

Office européen des brevets

(11) Publication number: **0 121 592**
**B1**

# EUROPEAN PATENT SPECIFICATION

(45) Date of publication of patent specification: **26.04.89**

(51) Int. Cl.⁴: **G 03 G 15/10**

(21) Application number: **83109917.1**

(22) Date of filing: **10.04.81**

(60) Publication number of the earlier application in accordance with Art. 76 EPC: **0 038 497**

(54) Method of and apparatus for toning an electrophotographic member.

(30) Priority: **11.04.80 US 139462**

(43) Date of publication of application:
**17.10.84 Bulletin 84/42**

(45) Publication of the grant of the patent:
**26.04.89 Bulletin 89/17**

(84) Designated Contracting States:
**BE CH DE FR GB IT LI NL**

(56) References cited:
**DE-A-2 417 721**
**DE-A-2 515 324**
**US-A-3 176 653**
**US-A-3 943 268**
**US-A-4 110 029**

**Patent Abstracts of Japan vol. 4, no. 115, 16 August 1980 page 29P23 & JP-A-55-69174 (Cat. P, Y)**

(73) Proprietor: **Stork Colorproofing B.V.**
**43 Wim de Korverstraat**
**NL-5830 AA Boxmeer (NL)**

(72) Inventor: **Thomas, Raymond E.**
**2865 Corlington Dr.**
**Dacton Ohio (US)**
Inventor: **Tibbits, John L.**
**35 Graywood Court**
**Centerville Ohio (US)**
Inventor: **Keane, John F.**
**2423 Periwinkle Dr.**
**Bellbrook Ohio (US)**
Inventor: **Kramer, George H.**
**2654 Henville Road**
**Xenia Ohio 45385 (US)**

(74) Representative: **Dorner, Jörg, Dr.-Ing. et al**
**Dorner & Hufnagel Patentanwälte Ortnitstrasse 20**
**D-8000 München 81 (DE)**

## Description

The present invention is related to a method and an apparatus for toning with a toning fluid an electrophotographic member with the features included in the preamble of claim 1 and claim 2, respectively. A toning method and a toning apparatus of this kind are known from DE—OS—25 15 324.

Imaging of electrophotographic members is carried out in special cases by means of radiant energy devices such as lasers, the imaged electrophotographic members being thereafter used for printing. In the case of lithographic offset printing, the actual imaged member itself is treated to render tone and untoned parts hydrophobic and hydrophilic respectively and the member comprises the plate without further processing. In other cases, the toned electrophotographic member may be used as an information source by reading the images or projecting them if transparent or photographically reproducing them is desired. The preferred use of the invention is to make the printing plates upon metal such as stainless steel.

Toning systems are known in which toning fluid is applied to the bottom of a rotating drum carrying the electrophotographic member wherein the distance from the imaging to the toning is minimal. In other systems, however, a large drum is used which rotates relatively slowly so that if a toning station where used which is located at the bottom of the drum, essentially all of the latent image would become discharged by the time the member was rotated to the toning station. Therefore, the toning station must be located closely adjacent the plane in which imaging occurs, which requires that toning fluid be applied in a layer which is essentially vertical.

This vertical layer or meniscus is provided in the above mentioned known system by a toning chamber totally sealed to the atmosphere.

A predetermined amount of toning fluid comprised in a tube section between controllable valves is allowed to flow with a predetermined speed to the toning chamber after opening of an air entrance, the speed of flow being determined by setting a pressure control element downstream the toning chamber to a higher pressure level, whereby a predetermined volume of toner liquid is drawn to the toning chamber which, thereafter, is emptied maintaining a pressure below atmospheric pressure in order to avoid any toning liquid to leak from the toning chamber. The known toning system does not provide for a toning liquid flow speed adapted to the speed of movement of the electrophotographic member past the toning station.

Therefore, it is an object of the present invention to further develop a method and an apparatus of toning with a toning fluid an electrophotographic member with the features of the preamble of claims 1 and 2, respectively, in such manner, that the flow of toning fluid can be adapted to the moving speed of the surface of the electrophotographic member carrying the latent image.

This object, in accordance with the present invention, is achieved by the features of the characterizing clause of claim 1 and claim 2, respectively.

A toning system in accordance with the present invention is used in digital platemaker systems to tone the latent images. The vertical meniscus, which as it flows, is essentially stationary relative to the movement of the imaged electrophotographic member as it passes a toning station.

Fig. 1 is a block diagram of an apparatus for making printing plates as constructed in accordance with the invention and uses the method of the invention;

Fig. 2 is a left-side elevation of the apparatus;

Fig. 3 is a plan view of the apparatus illustrated in Fig. 2 with the cover of the optical system and the cabinetry covering the drum removed;

Fig. 4 is a schematic diagram of the left-hand optical system of the apparatus;

Fig. 5 is a partial schematic diagram of the optical system illustrated in Fig. 4 taken along the lines 5—5 in the direction indicated;

Fig. 6 is a partial schematic diagram of the optical system illustrated in Fig. 4 and taken along the lines 6—6 in the direction indicated;

Fig. 7 is a partial schematic diagram of the optical system illustrated in Fig. 4 taken generally along the lines 7—7 in the direction shown;

Fig. 8 is a block diagram of the toning system of the apparatus;

Fig. 9 is a perspective view of the toning station and drum;

Fig. 10 is a perspective view of a shoe used in the toning system illustrated in Fig. 8;

Fig. 11 is a sectional view of a charging station and is a sectional view of the shoe illustrated in Fig. 10 showing the relationship of the charging station and shoe to the drum; and

Fig. 12 is an exploded view of a portion of the interface between the drum and the shoe illustrating the relative positions of the electrophotographic member and the toning fluid.

In the preferred embodiment, the imaging device receives digital data representing the graphics and text images to be printed or otherwise reproduced. This digital data is received from a compiling system which obtains raw data from such as optical scanning system, text input stations, etc., and compiles or formats the data representing the graphics and text materials into a form which may be used by the imaging device of the invention herein. The data received by the imaging device also may be generated or synthesized by a computer or by other means and may be presented to the imaging device from a memory in which it has been stored or it may be presented on line as it is generated or synthesized if the generation or synthesization rate is equal to or less than the imaging rate of an imaging device herein.

The output of the imaging device herein is an electrophotographic member carrying a toned latent image of charged and discharged incremental areas formed in response to the digital data. The toned member thereafter may be fused and processed for use as a printing plate in an offset lithographic printing press with the toned areas carrying ink to a receptor to form the tonal graphics and text images. If color printing is desired, as many electrophotographic members carrying toned latent images are formed, as there are colors which are desired to be printed, one member carrying a toned latent image for each of what is commonly known as a color separation.

The imaging device or imager used in the preferred embodiment of this invention uses a laser beam to image an electrophotographic member that includes a photoconductive coating that previously has been charged. The member is carried on a rotary drum, is toned on the drum and thereafter may be used to transfer the toned image or to serve as a medium for projection or printing of the image. In the case of printing, the toned image is used to carry ink in a printing press, the member having been treated to achieve hydrophilic and hydrophobic areas to enable offset lithographic use of the member as a printing plate.

The preferred use of the imaged member herein is as a printing plate and has the same type of photoconductive imagable coating preferably the receptor of the laser beams output from the apparatus of the invention. Such coating is that which is described and claimed in U.S. Patent 4,025,339. ·

The apparatus and method of the invention may best be understood by considering that the binary digital data input to the apparatus is used to binarily modulate a beam of radiant energy from a laser to selectively discharge and leave changed incremental areas of a charged electrophotographic member. Thereafter, the selectively charged and discharged pattern or image carried on the member is toned and output from the apparatus.

The electrophotographic member is carried on the outer circumference of a drum which is rotated along its longitudinal axis. Charging, imaging and toning of the member on the drum occurs sequentially at adjacent stations as the member is moved past the stations by the rotating drum. Charging of the electrophotographic member may be of any means desired and in the preferred embodiment occurs by placing adjacent the outer circumference of the drum a wire having a high voltage applied thereto. Toning of the imaged member occurs by applying to the member a quantity of carrier fluid obtaining toner particles. The charging and toning occurring at stations respectively above and below an imaging plane. Imaging of the charged electrophotographic member occurs by passing a fine beam of radiant energy from a laser across the surface of the member in image lines which are parallel to the longitudinal axis of the drum and lie in the imaging plane. Imaging of the entire surface of the charged member occurs in sequential image lines as the member is moved by the drum past the imaging plane.

The digital input to the imaging apparatus is in the form of two channels of graphics data and one channel of text data. Each digital word of the graphics data is used to form a picture element or a graphics pixel on the electrophotographic member. Every imaging line is comprised of two scan lines of graphics pixels with each channel of graphic's data respectively controlling the forming of graphics pixels in one scan line.

The text data controls the formation of text pixels across the entire scan line and therefore only one channel of text data is required. Every word of the text data is comprised of 8-bits of information with the least significant six bits each controlling the binary density of a text pixel, the next least significant bit serving as a control bit, and the most significant bit not being used.

The graphics data and text data are formated such that they may individually form respective graphics or text images across the entire area of the electrophotographic member. The electronics of the invention herein uses both text and graphics data to form one channel of laser modulation signals. Further, in the imaging apparatus herein, the information carried by the text data is used to gate the formation of the individual rays of the fine beam of radiant energy, each of which rays are used to discharge an incremental area on the charged electrophotographic member. Simply stated, it may be thought of that the text data is used to gate or modulate the formation of graphics pixels in response to the graphic data. Thus if the text data is a nullity, no text images are to be formed on the member, the information carried by the graphics data will form the graphic image represented thereby and discharge the remainder of the member.

Where the text data contains information representing a text image to be formed on the member, the text data may either inhibit the formation of individual rays of the fine beam or depending on the logical state of the control bit included in each word of text data. When the text data inhibits the formation of individual rays of the fine beam, the text image is formed on the member which will be toned and in the printing plate will carry ink to the receptor to print a solid image. This is a case where black text is desired on any background. When the text data forms individual rays of the fine beam, text pixels are discharged on the member with the discharged areas of the member forming areas of the printing plate which do not print on the receptor or which remain clear. This is the case where clear text is desired within a graphics image. Within the preferred embodiment of the invention, the text pixels are nine times more numerous than the graphics pixels, i.e., for every graphics pixel, there are nine text pixels which may be discharged or left charged. The resolution provided by the text pixels is not however nine times the resolution provided by the graphics pixels because of overlap of the text pixels. Of course it will be understood that the electrophotographic member is not physically divided into pixels of any type, scan lines or image lines, and that these terms are used only to describe the operation of the imaging apparatus and method.

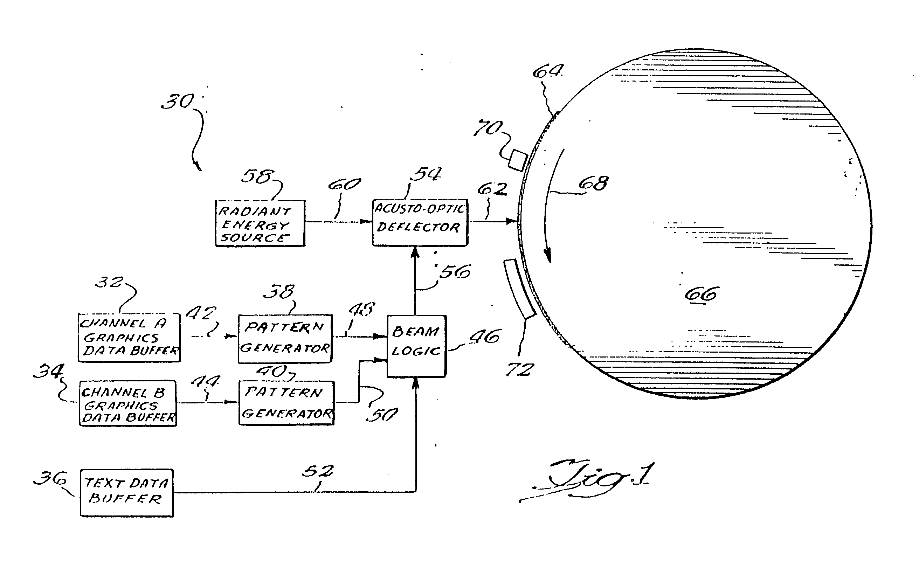

Referring now to Fig. 1 of the drawings, the apparatus of the invention there illustrated diagrammatically is indicated generally by the reference character 30. Two channels of graphics data are received by the apparatus respectively on channel A and channel B graphics data buffers 32 and 34. Text data is received into text data buffer 36. The graphics data contained in data buffers 32 and 34 individually are applied to pattern generators 38 and 40 over leads 42 and 44. In pattern generators 38 and 40, the density information carried by the digital words of the graphics data are converted into patterns of elements which are to be formed in graphics pixels on the member, the pixel patterns representing the densities indicated by the graphics data. The pattern information produced by pattern generators 38 and 40 then is applied to modulator 46 on leads 48 and 50 together with the text data from text data buffer 36 on lead 52. In modulator 46, the text data is used to modulate the pattern information from pattern generators 38 and 40. The output of modulator 46 which is applied to acousto-optic modulator 54 is the ray data which controls the formation of individual rays in the fine beam. The output of modulator 46 is carried to the acousto-optic modulator 54 on lead 56. A radiant energy source 58 is provided which produces a beam of radiant energy 60 which is essentially of one wave length and which is directed to acousto-optic modulator 54. Radiant energy source 58 is in the preferred embodiment a laser with the wave length of the beam of radiant energy 60 being chosen to most advantageously discharge areas of the electrophotographic member. Acousto-optic modulator 54 modulates the beam of radiant energy 60 to provide a fine beam 62 of radiant energy comprised of a plurality of individual rays and in some cases as little as a single ray.

The fine beam 62 is directed onto an electrophotographic member 64 carried on a drum 66 rotating in the direction indicated by arrow 68. The thickness of member 64 is exaggerated in Fig. 1 only so that member 64 may easily be seen on the circumference of drum 66. Charging of member 64 occurs at charging station 70 prior to the time at which fine beam 62 is applied to member 64 and toning of member 64 occurs after imaging by fine beam 62 at station 72.

It should be pointed out that while the preferred purpose of the invention is to make offset lithographic plates by electrostatic techniques described herein, any use of an electrophotographic member will find advantages where a member has been imaged according to the invention.

It will be appreciated that in forming several different color separation plates, it may be desired to form text images of a single color (for example blue text) in a field of a graphic image or otherwise. Thus in the blue printing separation plate, the text image must be found solid. On the other color separation plates that same area must be cleared so that only the color blue will be printed therein or the recepta. Thus by selectively using the solid forming and clearing capabilities of the text data, one may form the solid printing blue text image in the field of graphics or otherwise as may be desired.

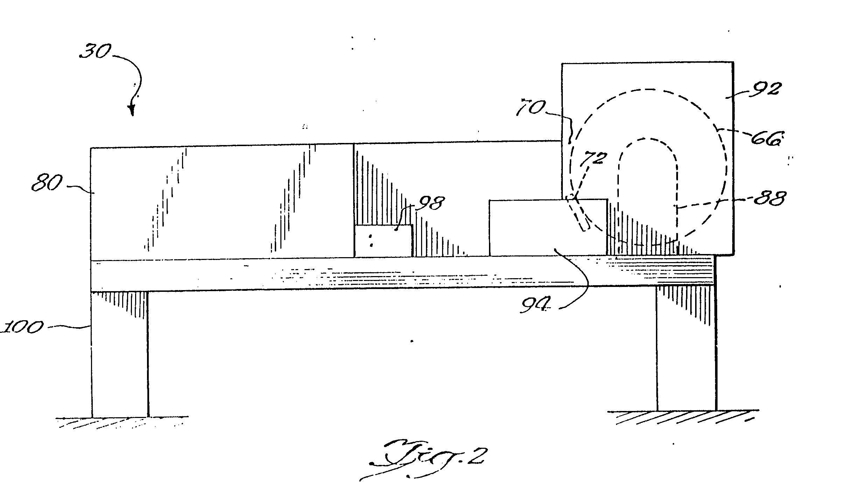

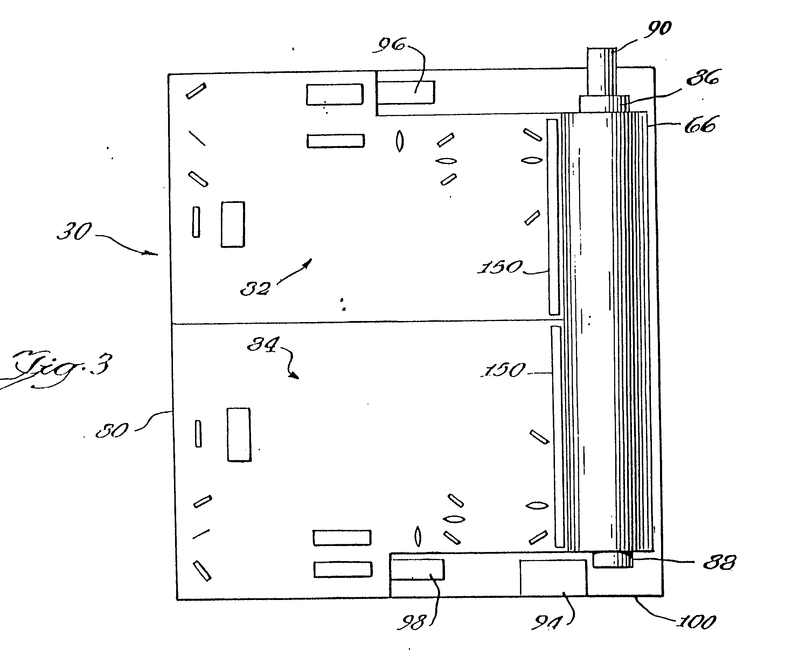

Turning now to Figs. 2 and 3, the preferred embodiment of the digital plate maker is illustrated including some of the cabinetry provided therewith. The apparatus 30 includes an optical cabinet 80 which encloses a left-hand optical system 82 and a right-hand optical system 84. Drum 66 extends the width of the left-hand and right-hand optical systems 82 and 84 so that an electrophotographic member carried thereon may be simultaneously and separately imaged by respective optical systems. Drum 66 is supported at each end by supports 86 and 88 and is rotationally driven by motor 90. As shown in Fig. 2, the drum is enclosed by a housing 92, which protects a member carried on drum 66 from ambient light. Optical cabinet 80 and housing 92 adjoin each other there being only a small slit opening between them through which the fine beam passes on its way to the charged electrophotographic member.

The electrophotographic member is held on drum 66 by a magnetic chuck which is formed of magnetic strips extending the length of drum 66 at the circumference thereof. The magnetic field produced by these magnetic strips is strong enough so that an electrophotographic member having a substrate of such as stainless steel will be securely held on the drum. In the preferred embodiment, the drum circumference is 1250 mm while the drum length is 1,100 mm. The drum is continuously rotated at a speed of 0.125 RPM which corresponds to 180 revolutions per day or 8 minutes per revolution. This provides a drum speed of 2.6 mm per second.

The center line of the charging station 70 is arranged to be 25 degrees above the image plane, while the center line of the toning station 72 is arranged to be 30 degrees below the imaging plane.

The maximum size electrophotographic member which may be carried by the drum 66 is a member which is 1.040 by 1.040 mm and the area of the member which may be imaged by each of the left and right hand optical systems is 50 cm axial of the drum by 70 cm circumferential of the drum or an area which is 20×28 inches.

A cabinet 94 is provided in which the toning tanks and pumps are contained with the hydraulic and nomadic connections between cabinet 94 and toning station 72 (not shown in the drawings for clarity purposes). Mounted on the exterior of cabinet 80 are two lasers 96 and 98, which provide the radiant energy respectively to the left-hand and right-hand optical systems 82 and 84. The entire apparatus 30 is supported by a frame 100 having the general configuration of a table. Auxiliary equipment for operating the apparatus 30 such as power supplies for the lasers 96 and 98 or control electronics for the motor 90 and auxiliary tanks for the toning system may be mounted under frame 100, and are not shown in Fig. 2 for clarity of the drawing.

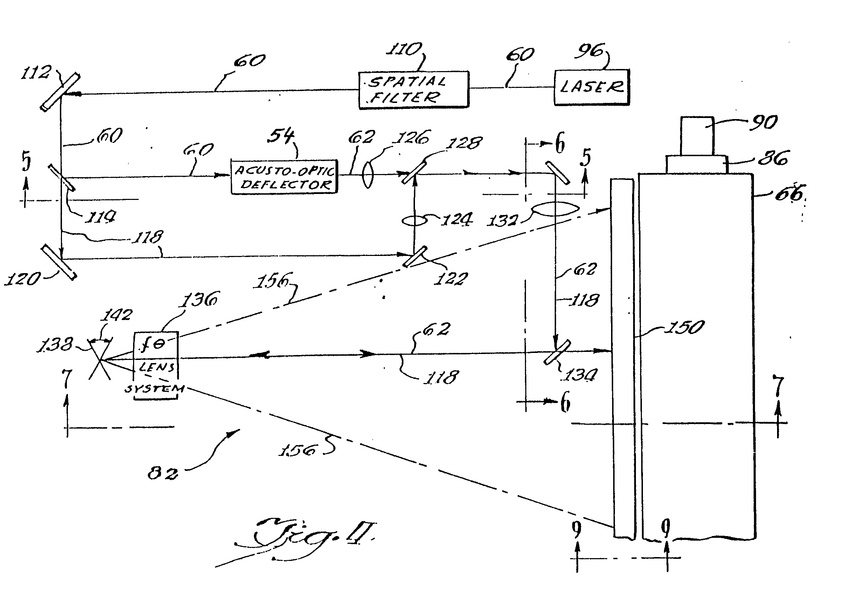

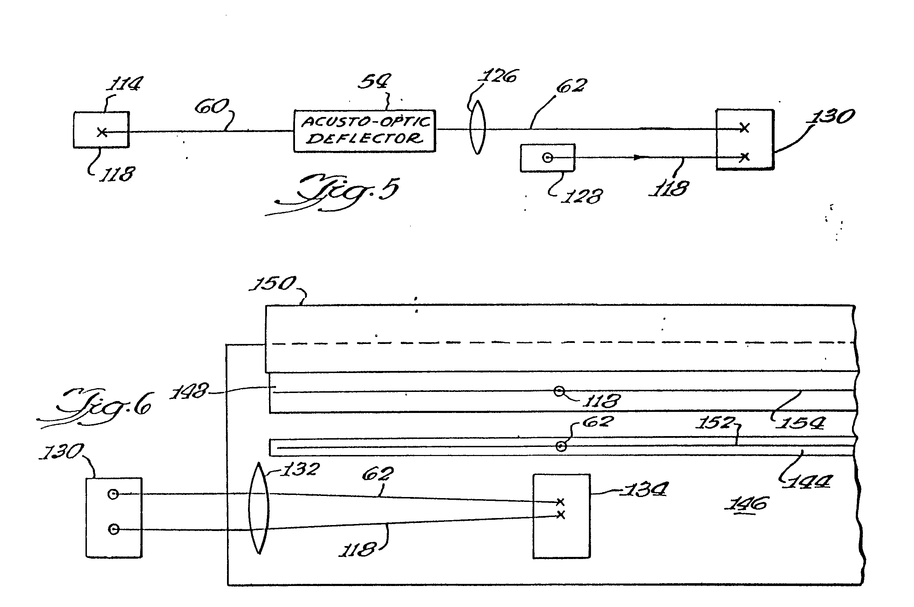

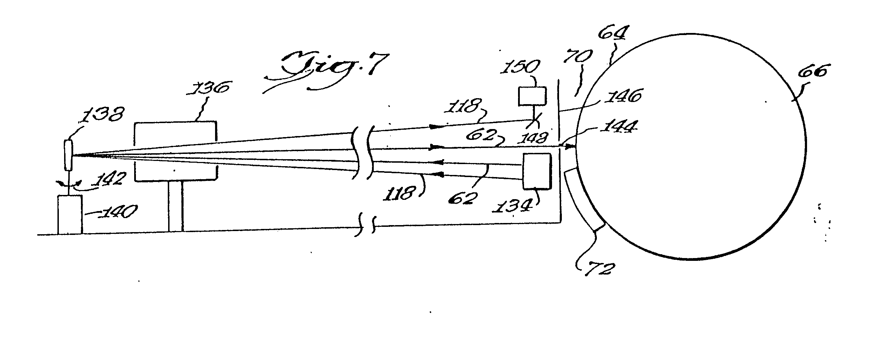

As may be seen in Fig. 3, the left-hand and right-hand optical systems 82 and 84, are mirror images of one another so that a description of one is a description of the other. Referring also to Figs. 4, 5, 6 and 7, laser 96 provides the beam of radiant energy 60 at spatial filter 110 which provides what may be termed a pinhole aperture to obtain a desired cross-sectional size of the beam. The beam 60 is transmitted through spatial filter 110 to folding mirror 112 which deflects beam 60 to beam splitter 114. A portion of beam 60 is transmitted through beam splitter 114 and forms a reference beam 118 which is deflected by folding mirror 120 and 122 to a spot forming lens 124. The portion of beam 60 which is deflected by beam splitter 114 is directed to acousto-optic deflector 54 which forms of beam 60 the individual rays which have ben referred to as the fine beam 60. Fine beam 62 exits acousto-optic deflector 54 and passes through spot forming lens 126 and passes under folding mirror 128. Reference beam 118 passes through spot forming lens 124 as deflected by folding mirror 128. After fine beam 62 passes under folding mirror 128, fine beam 62 and reference beam 118 are vertically aligned with one another through the remainder of the optical path. Referring to Fig. 5, reference beam 118 which is transmitted through beam splitter 114 is represented by a crossed line indicating that the light in reference beam 118 is exiting the drawing figure. Folding mirror 128 also is shown in Fig. 5 located above fine beam 62 after it passes through spot forming lens 126 and the circle at the center of folding mirror 128 representing that reference beam 118 is directed into drawing Fig. 5. Fine beam 62 and reference beam 118 then are deflected by folding mirror 130 with the crossed lines in Fig. 5 on folding mirror 130 indicating that the light is exiting from the drawing figure while the circles on folding mirror 130 on Fig. 6 indicate that the light is entering the drawing figure.

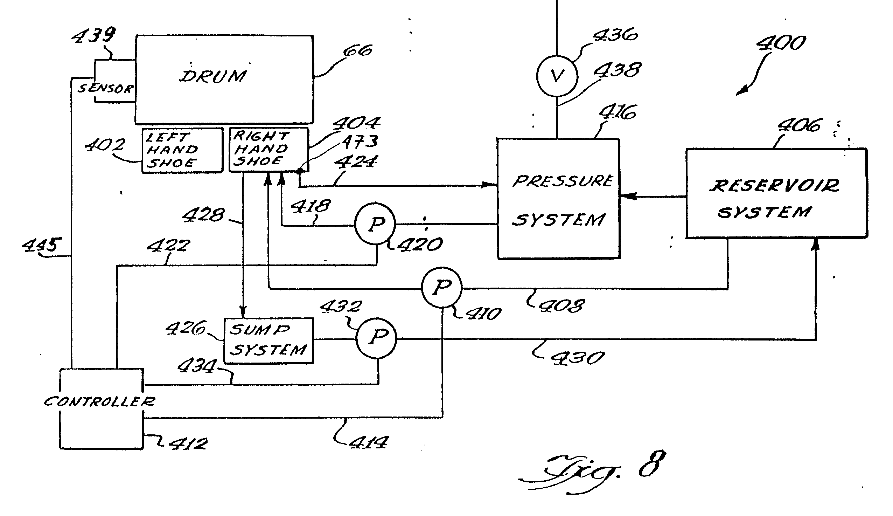

Fine beam 62 and reference beam 118 then are passed through a relay lens 132 to a folding mirror 134. Again the crossed lines on folding mirror 134 on Fig. 6 representing that the beams are exiting whe drawing figure. As also is shown in Fig. 7, beams 62 and 118 are deflected by folding mirror 134 through an f θ lens system 136 to a galvanometer mirror 138. Galvanometer mirror 138 is rotatably oscillated in the directions indicated by arrow 142 and direct fine beam 62 back through the f θ lens system 136 through an aperture 144 extending through the front plate 146 of cabinet 80 and then onto the charged electrophotographic member 64. Reference beam 118 is deflected by galvanometer mirror 138 back through f θ lens system 136 and onto a folding mirror 148 to an optical scale or grating system 150.

It will be noted that the deflection of fine beam 62 and reference beam 118 in horizontal directions by galvanometer mirror 138 does not disturb the vertical alignment of these two beams so that the position of reference beam 118 may be sensed by the optical scale or grating system and precisely locate the position of fine beam 62 which is used to image or write the images on the electrophotographic member 64. Galvanometer mirror 138 deflects fine beam 62 through a scan line 152 illustrated in Fig. 6 and deflects reference beam 118 along a scan line 154 lying on deflecting mirror 148. The extent to which the galvanometer mirror deflects fine beam 62 and reference beam 118 is represented in Fig. 4 by dashed lines 156.

It will be noted that as illustrated in Figs. 6 and 7, fine beam 62 and reference beam 118 are located below the imaging plane defined by fine beam 62 as it passes through aperture 144 and is directed onto electrophotographic member 64. The f θ lens system 136 provides field flattening for both fine beam 62 and reference beam 118 so that they may be maintained in focus respectively across the surface of the electrophotographic member 64 and across the surface of the optical scale or grating system 150. It will be noted that the distance travelled by fine beam 62 along an optical path from spot focussing lens 126 to member 64 is equal to the distance travelled along the optical path by reference beam 118 from spot forming lens 124 to optical scale or grating system 150.

The spatial filter or folding mirrors, beam splitters, spot forming lenses, relay lens and galvanometer mirror are all common optical elements which readily may be constructed and arranged in a system as has been described as may be desired.

In the preferred embodiment this spot forming lenses have a focal length of 26 mm, the relay lens has a focal length of 200 mm and the f θ system has a focal length of 870 mm. The distance between the spot forming lens and the relay lens is 559.2 mm while the distance between the relay lens and the f θ lens is 1,190 mm. The distance from the f θ system to the focal plane at the electrophotographic member 64 and the optical scale system 150 is of course 870 mm.

After the electrophotographic member 64 has been charged at charging station 70 and has been imaged with fine beam 62, the latent image carried thereon is toned at toning station 72, which is a portion of the vertical toning system of the digital platemaker.

The vertical toning system may best be understood by considering that its purpose is to apply toner (carrier fluid having suspending therein toner particles) to the electrophotographic member 64. The areas of member 64 which remain charged after imaging are the areas which accept the toning particles. The toned member thereafter has the toned particles fused to the member for use as a printing plate in such as a lithographic printing press, but this fusing step occurring otherwise than in the digital platemaker.

The toner which is supplied to the electrophotographic member is in the form of a carrier fluid known as "Isopar", which is a registered trademark of the Exxon Corporation. The carrier fluid is carrying finely ground particles of resinous material which may be positively or negatively charged, and in the preferred embodiment herein the particles are positively charged. Hereinafter, the term "toner fluid" will refer to this carrier fluid containing the resinous toner particles, while the term "carrier fluid" will refer only to the "Isopar" without the resinous particles.

As has been stated, the member 64 is mounted on drum 66 and is rotated thereby past charging station 70, imaging plane represented by the fine beam 62 and the toning station 72, at which the toner fluid is applied to the member.

It will be noted that electrophotographic member 64 comprises a substrate carrying a photoconductive coating, the substrate in the preferred embodiment being a magnetic material such as stainless steel and the electrophotoconductive coating being the coating disclosed and claimed in US—A—4,025,399. The member is held in the drum by magnetic strips embedded at the outer circumference of the drum, of course, other hold-down systems such as vacuum systems could be used to maintain the member in fixed relationship to the outer circumference of the drum. These other systems could further include clamps, springs, etc.

As the member rotates past the toning station 72, there is first applied thereto a quantity of carrier fluid which wets the surface of the member for purposes which will be described hereinafter. This wetting of the surface occurs at which may be called an upper chamber of the toning station 72. Thereafter, the toner fluid is applied to the member into phases which may be referred to as the initialization phase and the operational phase. During the initialization phase, a meniscus of toner fluid is established between toning station 72 and member 64, while during the operational phase, the meniscus is maintained between the toning station 72 and the member. It should be noted, as illustrated in Fig. 1, that toning station 72 is essentially vertical along the circumference of drum 66, and thereby the meniscus established between toning station 72 and member 64 is essentially vertical.

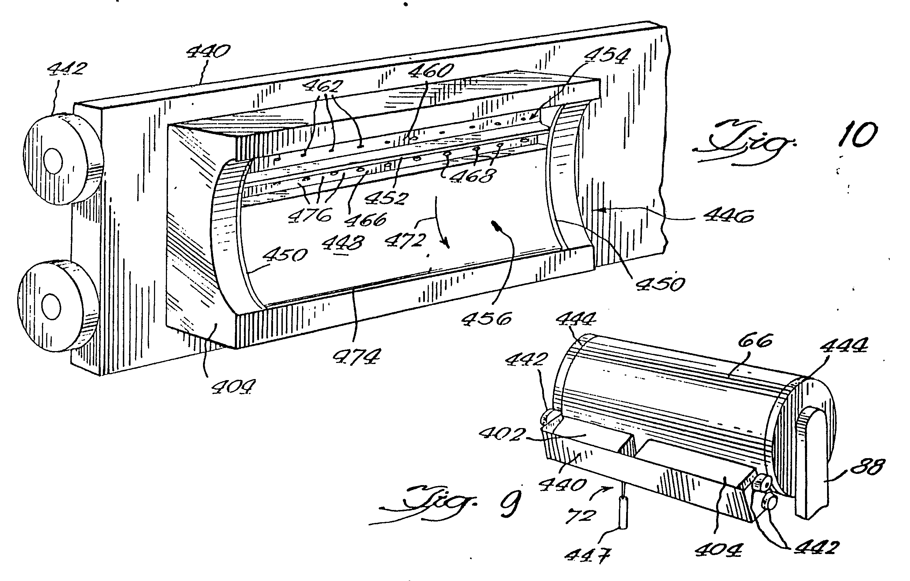

Turning now to Fig. 8, there is shown in block diagram form the toning system which is indicated generally by the reference character 400. The toning station 72 illustrated in the earlier drawings comprises left and right hand shoes 402 and 404, respectively. It is the shoes which are used to apply the toner fluid to the member 64, and it is between the shoes and the member 64 that the vertical meniscus is established and maintained. As may be readily understood, the left-hand shoe 402 is used in conjunction with the left hand optical system 82, while the right hand shoe 404 is used in conjunction with the right hand optical system 84. It will be understood that an explanation of the toning system for the right-hand optical system is an explanation of the toning system for the left-hand optical system, the toning systems for both sides being mere images or exactly the same for both sides. Thus Fig. 8 is a block diagram of both the left and right hand toning systems, although only one set of elements is illustrated.

During the initialization phase, carrier fluid is supplied from reservoir system 406 to the right hand shoe 404 by way of tubing 408 under action of pump 410. Pump 410 operates in response to or under control of controller 412 by way of lead 414. Toner fluid is carried to right hand shoe 404 from the pressure system 416 by way of tubing 418 under control of pump 420, pump 420 being controlled in turn by controller 412 by leads 422. Excess toner fluid is returned to pressure system 416 from right hand shoe 404 by way of tubing 424.

Used toner fluid is carried to sump system 426 by way of tubing 428, sump system 426 being at a vacuum or having a vacuum with which to remove the used toner fluid from the member. Used toner fluid contained in sump system 426 may be returned to the reservoir system 406 by way of tubing 430 by action of pump 432, pump 432 in turn being controlled by controller 412 by way of leads 434.

After the meniscus has been established during the initialization phase, valve 436 is used to admit air into pressure system 416 over tubing 438 to aid in the maintenance of the meniscus between the shoe 404 and the member 64.

It is important that the application of the carrier and toner fluids and the operation of the vacuum sump system occur at the proper time intervals as the member 64 is rotated past the shoe 404 and to obtain the timing information and sensor 439 is coupled to drum 66 and supplies the timing information to controller 412 by way of leads 445.

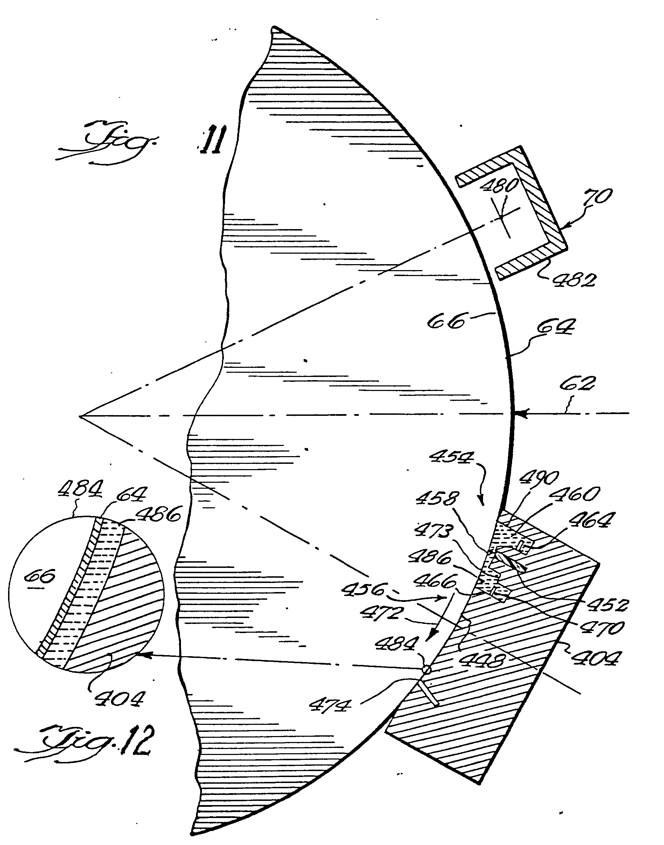

The toning station 72 is generally illustrated in Fig. 9 wherein left and right hand shoes 402 and 404 are carried by backplate 440. The backplate 440 carries four rollers, 442, two at each end which are in rolling contact with drum 66 along surfaces 444. Rollers 442 are adjustable by way of a cam mounting to adjust the spacing between shoes 402, 404, and drum 66. The spacing required between the shoes 402, 404 and drum 66 must be sufficient for the electrophotographic members 64 to pass therebetween and there must be additional spacing to provide for the meniscus of toner fluid established therebetween.

Toning station 72 has two positions, one being with the rollers engaged against the surfaces 444 of drum 66 during an imaging and toning cycle, and the other position being spaced from the drum and at a level below the drum in a non-toning position. A pneumatic of hydraulic cylinder 447 is provided to move the toning station 72 between these two positions and further is used to provide the toning station 72 between these two positions, and further is used to provide a slight bias to maintain rollers 442 in contact with surfaces 444. Rollers 442 are engaged against surfaces 444 at the two longitudinal ends of drum 66 so as not to interfere with member 64 which is carried on drum 66 therebetween. Of course any surfaces as may be desired may be provided upon which the rollers of plate 440 may ride.

Right hand shoe 404, as is illustrated in Fig. 10, is essentially a rectangular solid with a surface 446 which is to be placed adjacent the drum 66, having a portion 448 which is concave. The radius of this concave portion 448 is essentially equal to the radius of the drum 66 so that the concave portion 448 may be spaced equidistant from drum 66 across the entire area of the concave portion 448.

A seal member 450 is mounted on shoe 404 at the concave portion 448. This seal member 450 generally has the shape of a H with the cross-bar of H being biased towards the top of the seal. The seal is made from a resilient material such as polyurethane and is mounted into slots extending into the shoe. The seal is constructed so that when the shoe 404 is in the toning position, the edges of the seal 450 extending furthest from the shoe are engaged against the outer surface of the electrophotographic member 64.

The cross-bar 452 of the seal 450 separates the concave portion 448 into upper and lower portions 454 and 456. In the upper portion 454, clear carrier fluid is applied to the member 64 for several reasons. These include precoating or wetting the member 64 with this wetting acting as a barrier against toner particles which are not charged to reduce fogging of the latent image and further provides a lubricant for the seal 450 to reduce wear of the seal, improve the sealing characteristic thereof and reduce the power which would otherwise be required to be supplied by motor 90 to drive the drum 66.

Cross-bar 452 is constructed to provide a wiper blade portion 458 which allows only a microscopic coating of the carrier fluid to be applied to the member 64 as it passes thereby. Of course, the wiper blade portion 458 as it is wiped across the member 64 does not disturb the quality or characteristics of the latent image carried thereon. It will further be appreciated that the carrier fluid also does not affect the quality or characteristics of the latent image on member 64.

The upper portion 454 comprises an upper chamber 460 extending into shoe 404 and opening to concave surface 448. Supply ports 462 are arranged spaced from one another along the inner wall of upper chamber 460 and supply carrier fluid transported by tubing 408 from reservoir system 406, which is supplied thereto for application to the member 64. A baffle 464 shown in Fig. 11 is contained in upper chamber 460 so that carrier fluid from ports 462 may be evenly supplied to member 64 across the length of chamber 460.

The lower portion 456 of the concave portion 448 is the portion where toner fluid is applied to member 64. A lower chamber 466 extends into shoe 404 and opens to concave portion 448. Chamber 466 extends essentially the length of the shoe. It will be noted that the cross-bar 452 divides the upper and lower portions 454 and 456. Toner fluid is applied to lower chamber 466 by the way of inlet ports 468, spaced along the length of chamber 466 with the toner fluid being supplied from pressure system 416 by way of tubing 418. A baffle 470 may be provided in lower chamber 466 to evenly supply toner fluid to member 64 from the individual inlet ports 468.

From lower chamber 466, toner fluid may flow down in the direction indicated by arrow 472 along concave portion 448 to vacuum slot 474.

At vacuum slot 474, a reduction in atmospheric pressure of vacuum is created by sump system 426 by way of tubing 428. This vacuum operates to remove toner fluid from both member 64 and shoe 404 as the toner fluid flows down along the concave portion 448. From vacuum slot 474, toner fluid is carried to sump system 426 by tubing 428.

It should be noted that there are outlet ports 473 spaced along the length of lower chamber 466 and against the inner wall thereof, as is illustrated in Fig. 11. These outlet ports 473 provide for return of excess toner fluid by way of tubing 424 to pressure system 416. It also should be noted that the vacuum provided by sump system 426 may be formed by any means desired.

Fig. 11 generally illustrates the angular relationship between charging station 70, the incidence of fine beam 62 on member 64, and the position of shoe 404. In the preferred embodiment, the angle between the center line of charging station 70 and fine beam 62 is 25°. The angle between fine beam 62 and the center line of shoe 404 is 30°. While these angles are indicative of the preferred embodiment, it is desired to reduce these angles to be as small as possible so that there is a minimum time between the charging of the member 64 and the toning of the latent image on member 64.

It may be seen in Fig. 11 that charging station 70 comprises a charging wire 480 with a guard 482 forming a three-sided channel which is open towards drum 66. Wire 480 of course extends along the length of drum 66 as does guard 482. In the preferred embodiment, wire 480 carries a negative voltage and cover 482 may be made of conductive material and forms an electrostatic mirror.

Circle 484 along the interface between drum 66 and 244 is shown enlarged in Fig. 12 to illustrate the relative positions between drum 66, electrophotographic member 64, toner fluid 486 and shoe 404. The relative thicknesses of the elements are expanded in Fig. 12 for illustration purposes.

The operation of the toning system may best be understood by considering that as has been stated there are phases to its operation. The first phase is known as the initial phase, and during this phase, the toner system establishes a meniscus of toner fluid between shoe 404 and member 64. During the operation phase this meniscus is maintained between member 64 and shoe 404, and is allowed to flow in the direction indicated by arrow 47 at a controlled rate essentially equal to the angular rotation of the drum. Thus as member 64 is moved past lower chamber 466, it supplies toner fluid to the meniscus. A quantity of toner fluid is applied against member 64 and remains stationary relative to member 64, until it is removed by vacuum slot 474. Thus, there is a minimum amount of sheer between the meniscus and member 64 which provides for suitable toning of the latent image with the toning particles.

At this point, it will be discussed how the pre-wetting reduces the fogging of the latent image. The toner fluid, as has been said, contains particles of resinous material. These particles are very sticky in that they will readily adhere to most of the surface as they are brought into contact. Now when the toner fluid is manufactured, these particles are given in this case, a positive charge so that they will be attracted only to the areas which retain their negative charge from charging station 70. Not all of these particles however remain charged by the time they are used in the toning system herein.

When the toning fluid is used in the toning system, the charged particles readily are attracted to the oppositely charged areas of the latent image carried by member 64. The non-charged varticles however are not so attracted and will stick to any surface with which they may come into contact. By pre-wetting the surface member 64, a barrier is formed through which these non-charged particles generally will not pass. Although this pre-wetting is referred to as a barrier the action which is involved is more along the lines of the non-charged particles not passing through the pre-wet because there is no force which will drive them through the pre-wet.

During the initial phase of the toning cycle toner fluid is applied to the lower chamber 466 and falls essentially by means of gravity into the space established between concave portion 448 and member 64. The rate at which toner fluid is supplied to chamber 466 is much greater than the rate at which toner fluid may flow between concave surface 448 and member 64 with excess toner fluid being returned to the pressure system 416 through the outlet ports 473 by way of tubing 424. Pressure system 416 is sealed from the atmosphere and as toner fluid is removed from the pressure system by way of the meniscus which is formed between concave surface 448 and member 64, a negative pressure is formed in the pressure tank. When this negative pressure reaches a magnitude of 50 to 76 mm (two to three inches) of water, the toner fluid ceases to flow between the concave surface and the member 64. Air control valve 436 which is preset to allow a controlled and predetermined amount of air to enter into the closed pressure system 416, then controls the flow rate of the toner fluid in the meniscus between the concave surface 448 and member 64.

If the air flow control valve 436 were to be closed, the meniscus would essentially remain stationary in the vertical position discounting of course losses from the lower edge thereof occurring from gravity and from the vacuum slot 474.

As the air flow control valve 436 is opened, the rate of flow of toner fluid through the vertical meniscus increases. The establishment of this negative pressure in the pressure system 416 and the simultaneous establishment of the meniscus between concave portion 448 and member 64 is what has been defined to be the initial phase. Once the initial phase is completed, operation of the toning occurs through what has been described the operation phase. It should be understood that there are not two separate phases occurring in operation of the toning system, but rather two phases which are used to describe the operation of the toning system.

The rate at which air is allowed to enter into the pressure system 416 through control valve 436 is predetermined so that the flow rate of toner fluid therebetween occurs at the same speed as the angular rate of rotation of drum 66. Thus the toner fluid flows essentially stationary to the member 64. As the lower edge of the meniscus approaches the vacuum slot 474, toner fluid less the toner particles attracted to the member 64 by the latent image is removed from the member 64 with the aid of the described atmospheric vacuum.

In summary, the vertical toning system provides a meniscus of toning fluid which is essentially vertical and which is essentially stationary relative to the movement of the electrophotographic member 64 to provide toning of the latent image on the member 64. Control of the flow of the meniscus relative to the member may be easily controlled through a suitable air control valve 436 and the toner fluid is applied to member 64 after a period of time which is relatively short after imaging of the member has occurred.

It will be noted that clear carrier fluid is indicated in upper chamber 460 by reference character 490, while toner fluid is indicated in the lower chamber 466 by reference character 486.

In the preferred embodiment, the meniscus has a thickness or the concave portion 448 as spaced from member 64 has a distance of about 0.33 mm (13/1000 of an inch). Shoe 404 may be made of any material which is nonreactive to the "Isopar" carrier fluid, such as aluminum or stainless steel. It further should be noted that when the toning station 72 is removed from being adjacent drum 66 to the non-toning position, the vacuum which is created at vacuum slot 474 is increased to clear off both the shoe and the member.

It is important that the commencement of the flowing of the carrier fluid and toner fluid to the shoe occurs at the proper time in relationship to the movement of the member 64 across the shoe 404. If these fluids are applied to the shoe too early, they are not contained within the seals provided by seal member 450 and may cause a mess while if the fluids are applied too late, the seals may stick to the member 64.

Referring back to the two toner shoes 402 and 404, it is entirely possible that one toning shoe could be used in place of the two shoes.

## Claims

1. A method of toning with a toning fluid (486) an electrophotographic member (64) carrying a latent image of charged and discharged areas, the method comprising:

providing an essentially vertically aligned chamber (466) adjoining at least a portion of the member carrying the latent image, the chamber being defined by the member, an essentially vertical wall spaced from and parallel to the member, a supply system containing a quantity of toning fluid and able to supply toning fluid (486) to the top of the chamber and including a controllable valve (436) through which atmosphere may be admitted to the system, a seal carried by the vertical wall and engaging against the member, maintaining the chamber essentially sealed to the atmosphere, during movement of the member (64) relative to the chamber (466) in a downward direction at a predetermined speed, characterised by the seal (450, 452) extending around opposite ends and the top of the chamber so that the chamber is open to the bottom; when supplying toning fluid to the top of the chamber from the supply system, the toning fluid moving from the top of the chamber to the bottom of the chamber under the force of gravity, the toning fluid which is moving down through the chamber and thereby being removed from the supply system causing a negative atmospheric pressure in the supply system, and when the negative pressure in the supply system equals the weight of the toning fluid moving down through the chamber (466), the toning fluid being held stationary and in equilibrium in an essentially vertical meniscus filling essentially the volume of the chamber; admitting atmosphere to the supply system (416, 418, 462) at a controllable rate to reduce the negative pressure in the supply system so that the toning fluid may move down through the chamber; and controlling (by 436) the rate of atmosphere being admitted to the supply system so that the speed of movement of the toning fluid (486) in the chamber is essentially equal to the speed of movement of the member (64), thereby the toning fluid remaining essentially stationary relative to the member.

2. Apparatus for toning with a toning fluid (486) an electrophotographic member (64) carrying a latent image of charged and discharged areas comprising:

shoe means (402, 404) adjoining at least a portion of the member (64) carrying the latent image, the shoe means providing an essentially vertical wall spaced from and parallel to the member, a seal (450) carried by the vertical wall and extending outward therefrom to engage against the member, the member, the seal and the vertical wall defining an essentially vertically aligned chamber sealed to the atmosphere supply means (416, 418, 462) coupled to the shoe at the top of the chamber and containing a quantity of toning fluid to be supplied to the top of the chamber, the supply means including a controllable valve (436) through which atmosphere may be admitted to the system; means for moving the member relative to the chamber in a downward direction in a predetermined speed with the seals maintaining the chamber essentially sealed to the atmosphere; pump means (420) for supplying toning fluid to the top of the chamber from the supply system, characterised in that the chamber is not sealed to the bottom; the toning fluid moving from the top of the chamber to the bottom of the chamber under the force of gravity; the toning fluid moving down through the chamber thereby being removed from the supply system causing a negative atmospheric pressure in the supply system, and when the negative pressure in the supply system equals the weight of the toning fluid moving down through the chamber, toning fluid being held stationary and in equilibrium in an essentially vertical meniscus filling the volume of the chamber; and by control means (412) operating the controllable valve (436) to admit atmosphere to the supply system at a controlled rate to reduce the negative pressure in the supply system so that the toning fluid may move down through the chamber with a speed of movement of the toning fluid (486) in the chamber essentially equal to the speed of movement of the member (64) so that the toning fluid remains essentially stationary relative to the member.

## Patentansprüche

1. Verfahren zum Entwickeln eines elektrophotographischen Elementes (64), das ein latentes Bild aus geladenen und entladenen Bereichen trägt, mit einem Tonerfluid (486), wobei das Verfahren folgende Schritte aufweist:

Vorsehen einer im wesentlichen vertikal ausgerichteten Kammer (466), die an mindestens einem Teil des das latente Bild tragenden Elementes angrenzt, wobei die Kammer durch das Element begrenzt wird und eine im wesentlichen vertikale Wand in Abstand von und parallel zu dem Element verläuft, ferner eines Systems, welches eine Menge des Tonerfluid enthält und das Tonerfluid (186) dem Oberteil der Kammer zuführen kann und ein steuerbares Ventil (436) aufweist, durch das dem System Umgebungsluft zugeführt werden kann, weiter einer Dichtung, die von der vertikalen Wand getragen ist und an dem Element anliegt, um die Kammer im wesentlichen von der Umgebung abzudichten, während sich das Element (64) in Abwärtsrichtung mit vorbestimmter Geschwindigkeit bewegt, dadurch gekennzeichnet, daß die Dichtung (450, 452) sich um die einander gegenüberliegenden Enden und die Oberseite der Kammer herum erstreckt, so daß die Kammer unten offen ist; daß ferner dann, wenn Tonerfluid zum Oberteil der Kammer vom Speisesystem aus zugeführt wird, das Tonerfluid sich unter Schwerkraftwirkung von der Oberseite der Kammer zur Unterseite der Kammer bewegt und nach abwärts durch die Kammer strömt, wobei dem Speisesystem Tonerfluid entzogen wird und ein negativer atmosphärischer Druck im Speisesystem das Gewicht des Tonerfluids, das durch die Kammer (466) nach abwärts strömt, ausgleicht, das Tonerfluid stillstehend und im Gleichgewicht als ein im wesentlichen vertikaler Meniskus gehalten wird, der im wesentlichen das Volumen der Kammer ausfüllt; daß dem Speisesystem (416, 418, 462) atmosphärische Luft mit einer steuerbaren Geschwindigkeit zugeführt wird, um den Unterdruck im Speisesystem zu vermindern, so daß das Tonerfluid durch die Kammer nach abwärts strömen kann; und daß (mittels 436) die Geschwindigkeit der Zufuhr atmosphärischer Luft zu dem Speisesystem so gesteuert wird, daß die Geschwindigkeit der Strömung des Tonerfluids (486) in der Kammer im wesentlichen gleich der Geschwindigkeit der Bewegung des Elements (64) gehalten wird, um zu erreichen, daß das Tonerfluid relativ zu dem Element im wesentlichen stillsteht.

2. Einrichtung zum Entwicklen eines elektrographischen Elementes (64), welches ein latentes Bild aus geladenen und ungeladenen Bereichen aufweist, mittels eines Tonerfluids (486) enthaltend:

Ein schuhförmiges Teil (402, 404), welches das latente Bild trägt, angrenzt, wobei das schuhförmige Teil eine im wesentlichen vertikal verlaufende Wand im Abstand von und parallel zu dem Element bildet, ferner eine Dichtung (450), die an der vertikalen Wand gehalten ist und sich von dieser nach auswärts erstreckt, um an dem Element anzuliegen, wobei das Element, die Dichtung und die vertikale Wand zusammen eine im wesentlichen vertikal ausgerichtete Kammer bilden, die gegenüber der Umgebung abgedichtet ist, ferner ein Speisesystem (416, 418, 462), das an das schuhförmige Teil im oberen Bereich der Kammer angeschlossen ist und eine Menge eines Tonerfluids enthält, das dem oberen Bereich der Kammer zugeführt wird, wobei das Speisesystem ein steuerbares Ventil (436) aufweist, über das Umgebungsluft dem System zugeführt werden kann; ferner Mittel zur Bewegung des Elementes relativ zu der Kammer in Abwärtsrichtung mit vorbestimmter Geschwindigkeit, wobei Dichtungen die Kammer im wesentlichen gegenüber der Umgebung abgedichtet halten; weiter Pumpeinrichtungen (420) zum Zuführen von Tonerfluid zu dem oberen Teil der Kammer von dem Speisesystem aus, dadurch gekennzeichnet, daß die Kammer auf der Unterseite nicht abgedichtet ist, daß das Tonerfluid unter Schwerkraftwirkung von der Oberseite der Kammer zum unteren Teil der Kammer strömt; daß das Tonerfluid nach abwärts die Kammer durchströmt, wobei das Tonerfluid aus dem Speisesystem abgezogen wird und einen Unterdruck in dem Speisesystem aufbaut, daß, wenn der Unterdruck in dem Speisesystem das Gewicht des Tonerfluids, das in der Kammer nach abwärts strömt, ausgleicht, das Tonerfluid stillstehend gehalten ist und im Gleichgewicht als im wesentlichen vertikaler Meniskus das Volumen der Kammer erfüllt; und daß Steuermittel (412) vorgesehen sind, welche das steuerbare Ventil (436) so steuern, daß Umgebungsluft dem Speisesystem mit steuerbare Geschwindigkeit zuführbar ist, um dem Unterdruck in dem Speisesystem derart zu reduzieren, daß das Tonerfluid die Kammer nach abwärts mit einer Bewegungsgeschwindigkeit des Tonerfluids (486) innerhalb der Kammer durchströmen kann, welche im wesentlichen gleich der Bewegungsgeschwindigkeit des Elementes (64) ist, so daß das Tonerfluid relativ zu dem Element im wesentlichen stillsteht.

**Revendications**

1. Procédé de tonériser, moyennant un fluide de tonérisation (486), un élément électrophotographique (64) qui porte une image latente composée par des aires chargées et déchargées, ledit procédé comprenant les opérations suivantes:

disposition d'une chambre essentiellement en orientation verticale (466) et touchante à au moins une partie dudit élément portant l'image latente, ladite chambre étant définie par ledit élément, une paroi essentiellement verticale et écartée, en parallèle, dudit élément, un système d'alimentation en fluide tonérisation (486) passant une quantité dudit fluide vers la partie supérieure de ladite chambre, qui comprend une soupape contrôlable (436) par laquelle de l'air atmosphérique se peut introduire dans ledit système, un joint d'étanchéité étant porté par ladite paroi verticale et en contact avec ledit élément pour maintenir ladite chambre en condition essentiellement étanche vers l'atmosphère quand ledit élément (64) se déplace en bas relativement à ladite chambre (466) à une vitesse déterminée, caractérisé par ledit joint d'étanchéité (450, 452) qui s'étend autour des extrémités opposées et la partie supérieure de ladite chambre afin de l'ouvrir vers le bas; par le mouvement dudit fluide de tonérisation de wu partie supérieure de ladite chambre vers la partie inférieure de la chambre, au cours de l'alimentation dudit fluide de tonérisation du système d'alimentation vers la partie supérieure de ladite chambre, sous l'action de la force de la pesanteur, pendant que ledit fluide de tonérisation, en son mouvement en bas par la chambre pour être enlevé du système d'alimentation, provoque une pression atmosphérique négative dans ledit système d'alimentation, et, dès que la pression négative dans le système d'alimentation est égale au poids du fluide de tonérisation qui passe en bas par ladite chambre (466), le fluide de tonérisation est maintenu en condition stationnaire et en équilibre en formant un ménisque qui remplit essentiellement le volume de ladite chambre; ainsi que par une admission de l'air atmosphérique dans le système d'alimentation (416, 418, 462) à une vitesse contrôlable afin de réduire la pression négative dans le système d'alimentation d'un emanière que le fluide de tonérisation puisse passer en bas par ladite chambre; et par un contrôle (à l'aide des moyens (436) de la vitesse à laquelle de l'air atmosphérique est admis dans le système d'alimentation d'une façon que la vitesse de mouvement du fluide de tonérisation (486) dans la chambre soit essentiellement égale à la vitesse du mouvement dudit élément (64), ledit fluide de tonérisation restant essentiellement stationnaire relativement audit élément.

2. Dispositif de tonérisation, moyennant un fluide de tonérisation (486), d'un élément électrophotographique (64) qui porte une image latente des aires chargées et déchargées, ledit dispositif comprenant:

des moyens de sabot (402, 404) contigus à au moins une partie dudit élément (64) portant l'image latente, lesdits moyens de sabot formant une paroi essentiellement verticale et écartée, en parallèle, dudit élément; de même comprenant un joint d'étanchéité (450) porté par ladite paroi verticale et s'en étandant au-delà pour entrer en contact avec ledit élément, pendant que ledit élément, ledit joint d'étanchéité et ladite paroi verticale coopèrent pour définir une chambre essentiellement en orientation verticale et étanche vers l'atmosphère, des moyens d'alimentation (416, 418, 462) étant associés audit sabot à la partie supérieure de ladite chambre et contenant une quantité du fluide de tonérisation à passer vers la partie supérieure de ladite chambre, lesdits moyens d'alimentation comprenant une soupape contrôlable (436) par laquelle de l'air atmosphérique peut être admis dans le système; des moyens pour un mouvement en bas dudit élément, relativement à ladite chambre, à une vitesse déterminé, aux joints d'étanchéité opé- tants à maintenir ladite chambre en condition essentiellement étanche vers l'atmosphère; des moyens de pompe (420) pour l'alimentation du fluide de tonérisation du système d'alimentation vers la partie supérieure de ladite chambre, caractérisé en ce que ladite chambre n'est pas étanche vers le bas; que le fluide de tonérisation passe de la partie supérieure de ladite chambre vers la partie inférieure de ladite chambre sous l'action de la pesanteur; que le fluide de tonérisation passe en bas par ladite chambre pour être enlevé du système d'alimentation, en provoquant une pression atmosphérique négative dans ledit système d'alimentation, et en ce que, dès que la pression négative dans le système d'alimentation est égale au poids du fluide de tonérisation, qui passe en bas par ladite chambre, le fluide de tonérisation est maintenu en condition stationnaire et d'équilibre, en formant un ménisque essentiellement vertical qui remplit le volume de ladite chambre; et en ce que des moyens de contrôle (412) aigssent sur la soupape contrôlable (436) afin d'introduire de l'air atmosphérique dans le système d'alimentation à une vitesse contrôlée afin de réduire la pression négative dans le système d'alimentation d'une façon que ledit fluide de tonérisation puisse passer en bas par ladite chambre à une vitesse de mouvement qui est essentiellement égale à la vitesse de mouvement dudit élément (64) afin que ledit fluide de tonérisation reste essentiellement stationnaire relativement audit élément.

_Fig.1_

RADIANT ENERGY SOURCE

ACUSTO-OPTIC DEFLECTOR

CHANNEL A GRAPHICS DATA BUFFER

PATTERN GENERATOR

CHANNEL B GRAPHICS DATA BUFFER

PATTERN GENERATOR

BEAM LOGIC

TEXT DATA BUFFER

EP 0 121 592 B1

*Fig.2*

*Fig. 3*

*112* *60* *110* *60* *96*

SPATIAL FILTER    LASER

*90*

*86*

*66*

*60* *60* *54* *62* *126* *128* *6* *5*

ACUSTO-OPTIC DEFLECTOR

*5*

*119*

*124* *132*

*118*

*120*

*122* *62*

*156* *118*

*136* *150*

*142*

*138* *62*

*fθ* LENS SYSTEM

*118*

*134*

*7* *6*

*82* *156* *9* *9*

Fig. II

ACUSTO-OPTIC DEFLECTOR

Fig.5

Fig.6

Fig.7

Fig. 8

*Fig. 10*

*Fig. 9*

Fig. 11

Fig. 12